# EUROPEAN PATENT SPECIFICATION

(11) **EP 4 397 611 B1**
(45) Date of publication and mention of the grant of the patent: **05.08.2026**
(21) Application number: 23869322.0
(22) Date of filing: 20.11.2023
(51) Int. Cl.: B65H 75/36, H02G 1/06, B65H 54/56, B65H 55/04

(54) **CABLE BUNDLE, CABLE BUNDLE MANUFACTURING METHOD, AND CABLE BUNDLE MANUFACTURING DEVICE**
KABELBÜNDEL, KABELBÜNDELHERSTELLUNGSVERFAHREN UND KABELBÜNDELHERSTELLUNGSVORRICHTUNG
FAISCEAU DE CÂBLES, PROCÉDÉ DE FABRICATION DE FAISCEAU DE CÂBLES ET DISPOSITIF DE FABRICATION DE FAISCEAU DE CÂBLES

(30) Priority: 24.11.2022 JP 2022187748
(43) Date of publication of application: 10.07.2024
(73) Proprietor: Fujikura Ltd., Tokyo 135-8512 (JP)
(72) Inventor: MAEHARA, Naoya, Sakura-shi Chiba 285-8550 (JP); LUO, Shengyang, Sakura-shi Chiba 285-8550 (JP); NAMAZUE, Akira, Sakura-shi Chiba 285-8550 (JP)
(74) Representative: Ter Meer Steinmeister & Partner
(86) International application number: PCT/JP2023/041683
(87) International publication number: WO 2024/111561

(56) References cited:
- JP-A- 2001 310 868
- JP-A- 2013 184 795
- JP-A- 2018 063 812
- JP-U- S52 142 926

## Description

### [TECHNICAL FIELD]

The present invention relates to a cable bundle, a method of manufacturing the cable bundle, and a cable bundle manufacturing apparatus.

### [BACKGROUND ART]

As a method of winding a cable, a so-called "figure-8 (figure-eight) winding" is known, in which the cable is wound while forming loops by twisting the cable alternately clockwise and counterclockwise (for example, refer to Patent Document 1). In the "figure-8 winding", when the cable is extended by unwinding the first and second loops, no twist occurs in the cable because the helical twist generated when unwinding the first loop (the second loop) cancels the twist applied when making the second loop (the first loop).

### [CITATION LIST]

### [PATENT DOCUMENT]

PATENT DOCUMENT 1: JP 2017-5840 A1 A cable bundle, a method of manufacturing a bundle and a cable bundle manufacturing apparatus according respectively to the preamble of claims 1, 9 and 13/14 are disclosed in JP 2018 063812 A. A similar cable bundle is disclosed in JP 2013 184795 A.

### [SUMMARY OF THE INVENTION]

### [Problems to be solved by Invention]

When the cable is continuously wound in the "figure-8 winding" described above, the intersections of the cable overlap in the winding direction of the cable. For this reason, if the cable has high bending rigidity, a loop being to be unwound later may lift up when the cable is unwound from the cable bundle, and the cable may be tangled and kinking may be caused in the cable. In particular, this phenomenon tends to occur frequently when the cable bundle is housed in a container and the cable is pulled out from the opening of the container.

The problem to be solved by the present invention is to provide a cable bundle, a method of manufacturing the cable bundle, and a cable bundle manufacturing apparatus capable of suppressing the lifting of the loop.

### [MEANS FOR SOLVING PROBLEM]

According to the invention, the problem is solved by a cable bundle as specified in claim 1, by a method of manufacturing a cable bundle as specified in claim 9 and by a cable bundle manufacturing apparatus as specified in claims 13 and 14. More specific optional details of the invention are indicated in the dependent claims.

### [EFFECT OF THE INVENTION]

According to the present invention, since the connecting parts of the unit bundles adjacent in the second direction are located at different positions in the first direction, it is possible to suppress the lifting of the loop being to be unwound later. According to the present invention, since the first rotating device rotates the placement surface on which the loop of the cable is placed, it is possible to manufacture the cable bundle that includes the above-described connecting parts located at different positions in the first direction.

### [BRIEF DESCRIPTION OF DRAWING(S)]

FIG. 1 is a perspective view showing a cable bundle in the first embodiment of the present invention.
FIG. 2 is an enlarged side view of a part of the cable bundle shown in FIG. 1.
FIG. 3 (a) is a schematic plan view showing a position of a first intermediate part in the circumferential direction of the cable bundle, and FIG. 3 (b) is a schematic plan view showing a position of a second intermediate part in the circumferential direction of the cable bundle.
FIG. 4(a) to FIG. 4(e) are diagrams illustrating a method of forming a first unit bundle of the cable bundle in the first embodiment of the present invention.
FIG. 5(a) to FIG. 5(e) are diagrams illustrating a method of forming a second unit bundle of the cable bundle in the first embodiment of the present invention.
FIG. 6(a) to FIG. 6(e) are diagrams illustrating a method of forming a third unit bundle of the cable bundle in the first embodiment of the present invention.
FIG. 7 is a perspective view showing a configuration of a figure-8 shaped loop when the unit bundle is opened in the second embodiment of the present invention.
FIG. 8 is a side view showing a cable bundle in the second embodiment of the present invention and is a view corresponding to FIG. 2.
FIG. 9 is a developed view of a part of a cable bundle in the third embodiment of the present invention.
FIG. 10 is a diagram illustrating a cable bundle manufacturing apparatus in the third embodiment of the present invention.

### [MODE(S) FOR CARRYING OUT THE INVENTION]

Hereinafter, the embodiments of the present invention will be described with reference to the drawings.

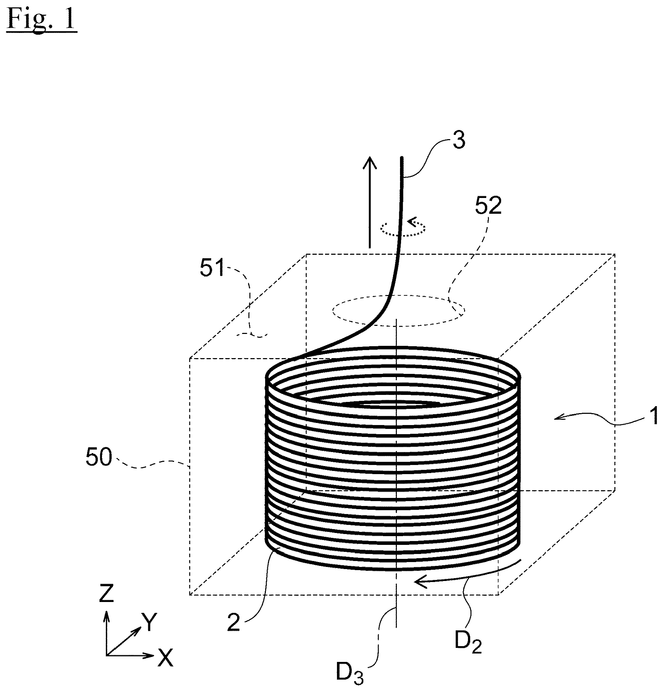

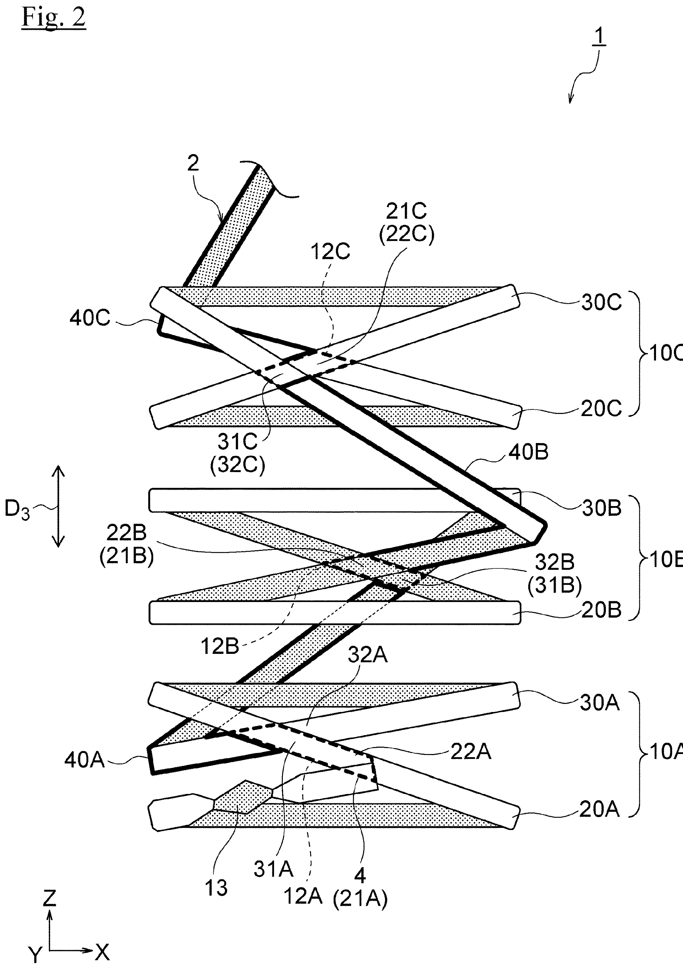

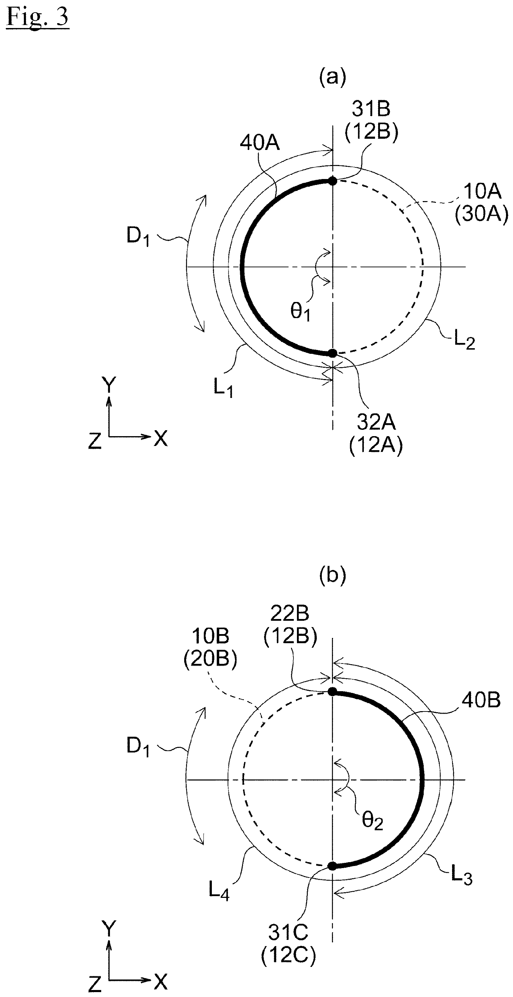

FIG. 1 is a perspective view showing a cable bundle 1 in the first embodiment of the present invention, FIG. 2 is an enlarged side view of a part of the cable bundle 1 shown in FIG. 1. FIG. 3 (a) is a schematic plan view showing a position of a first intermediate part 40A in the circumferential direction D₁ of the cable bundle 1, and FIG. 3 (b) is a schematic plan view showing a position of a second intermediate part 40B in the circumferential direction D₁ of the cable bundle 1.

In FIG. 1, the container 50 is shown transparently in order to facilitate understanding of the inside of the container 50. In FIG. 2, the white part in the cable 2 indicates the front side of the cable 2, the shaded part in the cable 2 indicates the rear side of the cable 2. Further, in FIG. 2, the thick solid line parts in the cable 2 indicate the intermediate parts 40A, 40B and 40C of the cable 2, the thick broken line parts in the cable 2 indicate the connecting parts 12A, 12B and 12C of the cable 2.

As shown in FIG. 1, the cable bundle 1 in the present embodiment includes a cable 2 that is wound in an annular shape (cylindrical shape, coil shape) in the winding direction D₂, and the cable bundle 1 is formed by winding a single continuous cable 2 using a winding method described later. The cable bundle 1 has a so-called drumless structure that does not have a winding core such as a drum or a reel. Although an optical fiber cable can be exemplified as a specific example of the cable 2, the cable 2 is not particularly limited thereto. For example, a metal cable for power transmission, communication, or a combination of these may be used as the cable 2. Although the cable 2 of the present embodiment has no connection point between one end portion 3 (e.g., the end of the winding end side of the cable 2 (E end)) and the other end portion 4 (e.g., the end of the winding start side of the cable 2 (S end)) (see FIG. 2), for example, a single continuous cable may be configured by connecting a plurality of cables with fusion or a connector or the like.

When installing the cable 2, for example, the cable bundle 1 is transported to the installation site while being housed in the container 50 as shown in FIG. 1. The container 50 has a box-like shape, and the container 50 has an opening 52 formed in its upper plane. Then, the cable 2 is sequentially send out from one end 3 to the outside of the container 50 through the opening 52, the cable 2 is supplied to the installation site. The cable bundle 1 is disposed in the container 50 in a posture (i.e., a "vertical posture") in which the axial D₃ of the cable bundle 1 is substantially parallel to the vertical direction (Z direction in the drawing). Although not particularly limited, for example, the container 50 is formed using a cardboard made of paper. For example, the container 50 may be formed using a plastic cardboard made of a resin material such as polypropylene (PP), or the container 50 may be formed using a metallic box.

As shown in FIG. 2, the cable bundle 1 includes unit bundles 10A, 10B, 10C, ... and intermediate parts 40A, 40B, 40C, .... Each of the unit bundles 10A, 10B, 10C, ... is formed by winding the cable 2 in a figure-8 shape to form two circular loops and folding the two loops, as will be described in more detail below. The unit bundles 10A, 10B, 10C, ... are stacked in the vertical direction (Z direction in the drawing). Further, each of the intermediate parts 40A, 40B, 40C, ... is the part of the cable 2 that is interposed between the unit bundles 10A, 10B, 10C, ..... Although FIG. 2 shows only three unit bundles 10A, 10B and 10C on the other end 4 side of the cable 2, the cable bundle 1 actually includes a large number of unit bundles.

The unit bundle 10A includes a first loop 20A and a second loop 30A. Although the first and second loops 20A and 30A have substantially the same diameter in the present embodiment, the diameters of the first and second loops 20A and 30A may be different from each other. The first loop 20A is formed by winding the cable 2 in a "normal winding". On the other hand, the second loop 30A is formed by winding the cable 2 in a "reverse winding". The two loops 20A and 30A are stacked so that the second loop 30A is disposed on the first loop 20A in the vertical direction (Z direction in the figure).

Here, in the present embodiment, the "normal winding" is a winding method in which the cable 2 is wound so that the start point of the loop is located on one side (for example, the lower side) with respect to the end point in the stacking direction of the two loops constituting the unit bundle. On the other hand, the "reverse winding" is a winding method in which the cable 2 is wound so that the start point of the loop is located on the other side (for example, the upper side) with respect to the end point in the stacking direction of the two loops.

Therefore, in the first loop 20A of the unit bundle 10A, since the cable 2 is wound so that the start point 21A is located on the lower side with respect to the end point 22A in the stacking direction D₃ (Z direction in the drawing) of the two loops 20A and 30A, the winding method of the first loop 20A is the "normal winding". On the other hand, in the second loop 30A of the unit bundle 10A, since the cable 2 is wound so that the start point 31A is located on the upper side with respect to the end point 32A in the stacking direction D₃ (Z direction in the drawing) of the two loops 20A and 30A, the winding method of the second loop 30A is the "reverse winding". The stacking direction D₃ (Z direction in the drawing) of the two loops 20A and 30A corresponds to an example of the "second direction" in the aspect of the present invention.

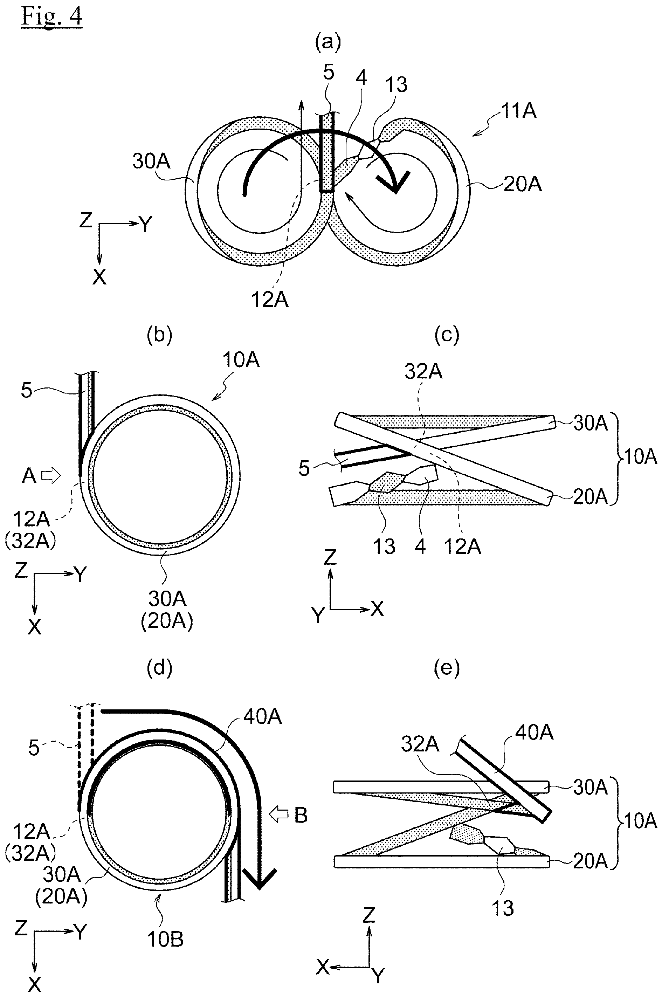

Since the bundle 10A is formed by the figure-8 (figure-eight) winding, the two loops 20A and 30A are connected via the connecting part 12A. In other words, the two loops 20A and 30A are connected to each other via the connecting part 12A so that a figure-8 shaped loop 11A (see FIG. 4(a) described later) including the first and second loops 20A and 30A is formed when the unit bundle 10A is opened. When the unit bundle 10A is opened (see FIG. 4(a)), the start point 21A of the first loop 20A is located below the end point 22A of the first loop 20A, and the start point 31A of the second loop 30A is also located below the end point 32A of the second loop 30A. By forming such the figure-8 shaped loop 11A, no twist due to the unit bundle 10A occurs in the cable 2 when the cable 2 is unwound.

Here, the first loop 20A is defined by making the cable 2 cross at the start point 21A and the end point 22A of the first loop 20A, and the second loop 30A is also defined by making the cable 2 cross at the start point 31A and the end point 32A of the second loop 30A. Thus, when the first intersection defining the first loop 20A and the second intersection defining the second loop 30A overlap in the circumferential direction D₁ of the cable bundle 1, the connecting part 12A coincides with the first and second intersections in the circumferential direction D₁. On the other hand, when the first and second intersections are located at different positions in the circumferential direction D₁ of the cable bundle 1, the connecting part 12A is the part of the cable 2 between the first and second intersections including the first and second intersections. Thus, the "figure-8 (figure-eight) shape" in the present embodiment includes the complete figure-8 shape in which the connecting part 12A has no length, and also includes the shape in which the two loops 20A and 20B are connected via the connecting part 12A having a length. The "figure-8 (figure-eight)" in the present embodiment is the Arabic numeral "8".

The unit bundle 10B includes a first loop 20B formed by winding the cable 2 in the normal winding and a second loop 30B formed by winding the cable 2 in the reverse winding. In the first loop 20B, since the cable 2 is wound so that the start point 21B is located on the lower side with respect to the end point 22B in the stacking direction D₃ (Z direction in the drawing) of the two loops 20B and 30B, the winding method of the first loop 20B is the "normal winding". On the other hand, in the second loop 30B, since the cable 2 is wound so that the start point 31B is located on the upper side with respect to the end point 32B in the stacking direction D₃ (Z direction in the drawing) of the two loops 20B and 30B, the winding method of the second loop 30B is the "reverse winding".

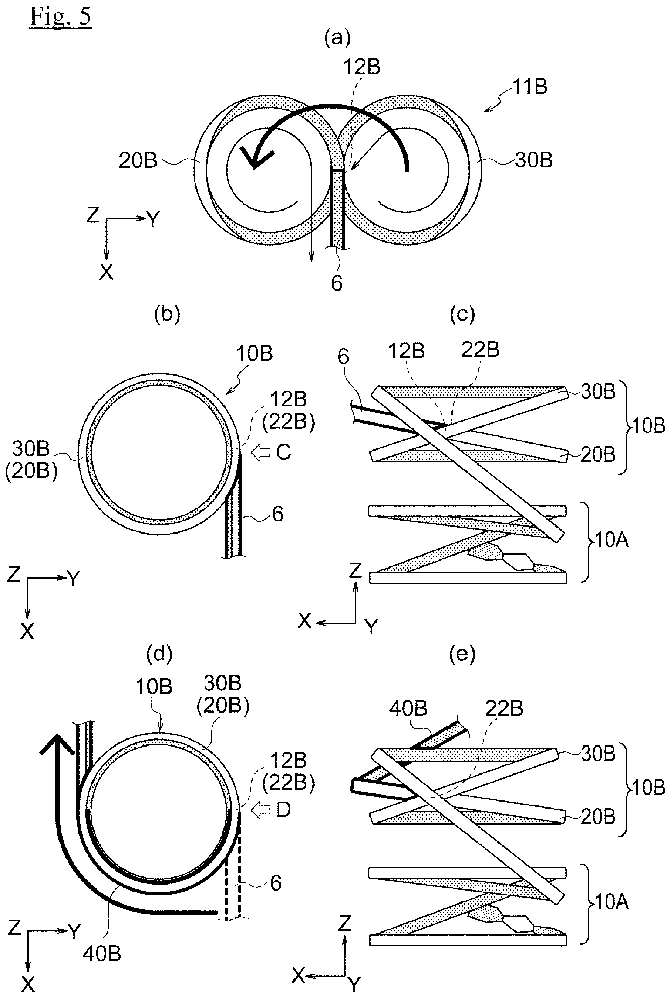

The two loops 20B and 30B are stacked so that the second loop 30B is disposed on the first loop 20B in the vertical direction (Z direction in the drawing). Since the bundle 10B is also formed by the figure-8 (figure-eight) winding, the two loops 20B and 30B are connected via the connecting part 12B. In other words, the two loops 20B and 30B are connected to each other via the connecting part 12B so that a figure-8 shaped loop 11B (see FIG. 5(a) described later) including the first and second loops 20B and 30B is formed when the unit bundle 10B is opened. When the unit bundle 10B is opened (see FIG. 5(a)), the start point 21B of the first loop 20B is located below the end point 22B of the first loop 20B, and the start point 31B of the second loop 30B is also located below the end point 32B of the second loop 30B. By forming such the figure-8 shaped loop 11B, no twist due to the unit bundle 10B occurs in the cable 2 when the cable 2 is unwound.

The unit bundle 10B is stacked on the unit bundle 10A. The unit bundles 10A and 10B are connected via the intermediate part 40A of the cable 2. The intermediate part 40A is the part of the cable 2 that is interposed between the unit bundles 10A and 10B, and the intermediate part 40A is wound in the circumferential direction D₁ of the cable bundle 1.

Although not particularly limited, in the present embodiment, as shown in FIG. 3(a), the length L₁ of the intermediate part 40A is 1/2 of the circumferential length L₂ of the second loop 30A of the lower unit bundle 10A to which the intermediate part 40A is connected (L₁=1/2×L₂), and the connecting part 12A of the unit bundle 10A and the connecting part 12B of the unit bundle 10B are located at different positions by 180 degrees in the circumferential direction D₁ of the cable bundle 1 (θ₁=180°). Therefore, the connecting parts 12A and 12B of the unit bundles 10A and 10B that are adjacent to each other in the stacking direction D₃ (Z direction in the drawing) of the unit bundles are located at different positions in the circumferential direction D₁ of the cable bundle 1. The circumferential direction D₁ of the cable bundle 1 corresponds to an example of the "first direction" in the aspect of the present invention.

The length L₁ of the intermediate part 40A may be 1/4 to 3/4 of the circumferential length L₂ of the second loop 30A (L₂×1/4 ≦L₁ ≦ L₂×3/4). In this case, the connecting part 12A of the unit bundle 10A and the connecting part 12B of the unit bundle 10B are located at different positions within the range of 90 degrees to 270 degrees in the circumferential direction D₁ of the cable bundle 1 (90° ≦ θ₁ ≦ 270°). Alternatively, the length L₁ of the intermediate part 40A may be 1/3 to 2/3 of the circumferential length L₂ of the second loop 30A (L₂× 1/3 ≦ L₁≦ L₂×2/3). In this case, the connecting part 12A of the unit bundle 10A and the connecting part 12B of the unit bundle 10B are located at different positions within the range of 120 degrees to 240 degrees in the circumferential direction D₁ of the cable bundle 1 (120° ≦ θ₁ ≦ 240°).

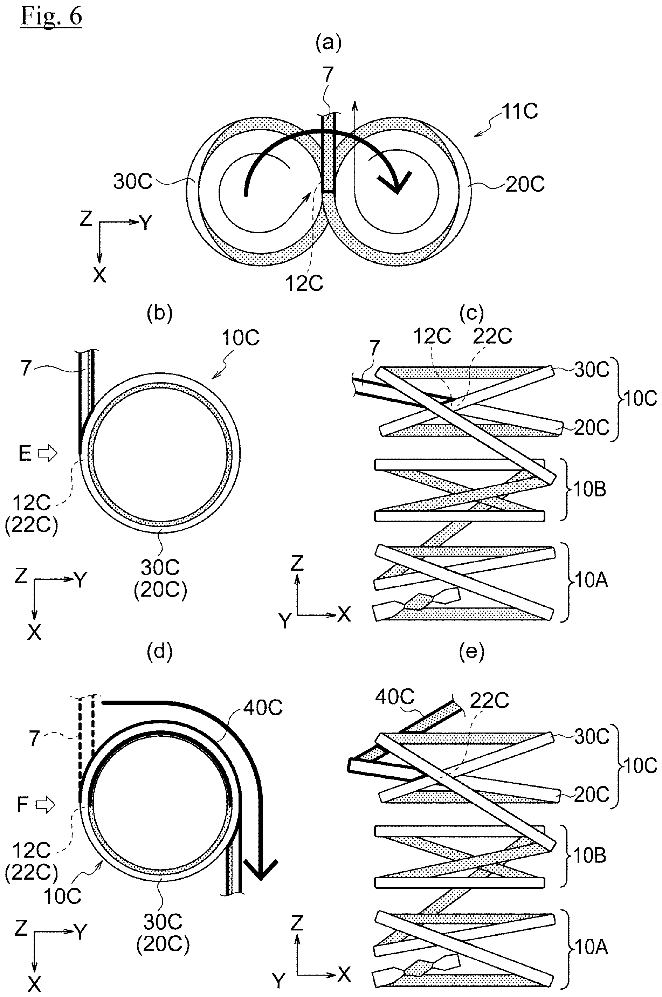

As shown in FIG. 2, the unit bundle 10C also includes a first loop 20C formed by winding the cable 2 in the normal winding and a second loop 30C formed by winding the cable 2 in the reverse winding. The two loops 20C and 30C are stacked so that the second loop 30C is disposed on the first loop 20C in the vertical direction (Z direction in the figure). Since the bundle 10C is also formed by the figure-8 (figure-eight) winding, the two loops 20C and 30C are connected via the connecting part 12C. In other words, the two loops 20C and 30C are connected to each other via the connecting part 12C so that a figure-8 shaped loop 11C (see FIG. 6(a) described later) including the first and second loops 20C and 30C is formed when the unit bundle 10C is opened. When the unit bundle 10C is opened (see FIG. 6(a)), the start point 21C of the first loop 20C is located below the end point 22C of the first loop 20C, and the start point 31C of the second loop 30C is also located below the end point 32C of the second loop 30C. By forming such the figure-8 shaped loop 11C, no twist due to the unit bundle 10C occurs in the cable 2 when the cable 2 is unwound.

The unit bundle 10C is stacked on the unit bundle 10B. The unit bundles 10B and 10C are connected via the intermediate part 40B of the cable 2. The intermediate part 40B is the part of the cable 2 that is interposed between the unit bundles 10B and 10C, and the intermediate part 40B is wound in the circumferential D₁ of the cable bundle 1.

Although not particularly limited, in the present embodiment, as shown in FIG. 3(b), the length L₃ of the intermediate part 40B is 1/2 of the circumferential length L₄ of the first loop 20B of the lower unit bundle 10B to which the intermediate part 40B is connected (L₃=1/2×L₄), and the connecting part 12B of the unit bundle 10B and the connecting part 12C of the unit bundle 10C are located at different positions by 180 degrees in the circumferential direction D₁ of the cable bundle 1 (θ₂=180°). Therefore, the connecting parts 12B and 12C of the unit bundles 10B and 10C that are adjacent to each other in the stacking direction D₃ (Z direction in the drawing) of the unit bundles are located at different positions in the circumferential direction D₁ of the cable bundle 1. Further, the above-described intermediate part 40A and the intermediate part 40B are located at different positions in the circumferential D₁ of the cable bundle 1.

The length L₃ of the intermediate part 40B may be 1/4 to 3/4 of the circumferential length L₄ of the first loop 20B (L₄×1/4≦L₂≦L₄×3/4). In this case, the connecting part 12B of the unit bundle 10B and the connecting part 12C of the unit bundle 10C are located at different positions within the range of 90 degrees to 270 degrees in the circumferential direction D₁ of the cable bundle 1 (90° ≦ θ₂ ≦ 270°). Alternatively, the length L₃ of the intermediate part 40B may be 1/3 to 2/3 of the circumferential length L₄ of the first loop 20B (L₄×1/3≦L₃≦L₄×2/3). In this case, the connecting part 12B of the unit bundle 10B and the connecting part 12C of the unit bundle 10C are located at different positions within the range of 120 degrees to 240 degrees in the circumferential direction D₁ of the cable bundle 1 (120° ≦ θ₂ ≦ 240°).

As shown in FIG. 2, in the cable bundle 1 of the present embodiment, the twist 13 is applied to the vicinity of the end part 4 of the unit bundle 10A on the winding start side. The twist 13 is applied to the cable 2 by twisting the cable 2 by one rotation in the direction opposite to a twist caused by the intermediate parts 40A and 40B when the cable 2 is unwound from the cable bundle 1. In other words, the twist 13 is applied to the cable 2 by twisting the cable 2 one rotation in the direction opposite to the winding direction D₂ (refer to FIG. 1) of the cable bundle 1 when viewing the cable bundle 1 from the pull-out side (end part 3 side) of the cable 2. The one rotation twist 13 of the unit bundle 10 can cancel the twist caused by the two intermediate parts 40A and 40B corresponding to one circumference of the cable bundle 1 when the cable 2 is unwound from the cable bundle 1.

Although not particularly shown, the upper unit bundles above the unit bundle 10C of FIG. 2 among the unit bundles are configured by alternately repeating the above-described unit bundle 10B and the unit bundle 10C (hereinafter simply referred to as "unit bundle 10B'" and "unit bundle 10C'"). The unit bundles 10B' and 10C' are connected via the above-described intermediate part 40B, and the connection parts 12B and 12C of the unit bundles 10B' and 10C' that are adjacent to each other in the stacking direction D₃ (Z direction in the figure) of the unit bundles are located at different positions in the circumferential direction D₁ of the cable bundle 1.

The unit bundle 10C shown in FIG. 2 (or unit bundle 10C') and the unit bundle 10B' are connected via the intermediate part 40C. Similar to the above-described intermediate parts 40A and 40B, the intermediate part 40C has a length that is 1/2 of the circumferential length of the first loop 20C of the lower unit bundle 10C to which the intermediate part 40C is connected. Therefore, the connecting parts 12C and 12B of the unit bundles 10C and 10B' (or unit bundles 10C' and 10B') that are adjacent to each other in the stacking direction D₃ (Z direction in the figure) of the unit bundles are also located at different positions in the circumferential direction D₁ of the cable bundle 1.

Further, in the upper unit bundles above the unit bundle 10C of FIG. 2 among the unit bundles, one rotation of twist 13 is applied to the two unit bundles 10B' and 10C'.

The position where the twist 13 is applied in the cable bundle 1 is not limited to the vicinity of the end part of the unit bundle. For example, the twist 13 may be applied to any position in the unit bundle, or the twist 13 may be applied to the intermediate part connecting the unit bundles. At this time, the total rotation number R of all the twists 13 applied to the entire cable bundle 1 is preferably equal to or less than the value obtained by dividing the total Lₜ of the lengths of all the intermediate parts 40A, 40B, ... of the cable bundle 1 by the average circumferential length L₀ of the cable bundle 1 (R ≦ Lₜ/L₀), and the rotation number R is more preferably equal to the value obtained by dividing the total Lₜ of the lengths of the intermediate parts 40A, 40B, ... by the average circumferential length L₀ of the cable bundle 1 (R=Lₜ/L₀). Thereby, the twist caused by the intermediate parts 40A, 40B, ... of the cable bundle 1 can be canceled. The average circumferential length L₀ of the cable bundle 1 is a value obtained by dividing the total length of the cable 2 by the winding number of the cable 2.

Hereinafter, the method of manufacturing the above-described cable bundle 1 will be described with reference to FIG. 4(a) to FIG. 6(e). FIG. 4(a) to FIG. 4(e) are diagrams illustrating the method of forming the first unit bundle 10A of the cable bundle 1 in the first embodiment of the present invention, FIG. 5(a) to FIG. 5(e) are diagrams illustrating the method of forming the second unit bundle 10B of the cable bundle 1 in the first embodiment of the present invention, and FIG. 6(a) to FIG. 6(e) are diagrams illustrating the method of forming the third unit bundle 10C of the cable bundle 1 in the first embodiment of the present invention.

FIG. 4(c) is the diagram of the unit bundle 10A viewed from the direction A in FIG. 4(b), and FIG. 4(e) is the diagram of the unit bundle 10A viewed from the direction B in FIG. 4(d). Similarly, FIG. 5(c) is the diagram of the unit bundle 10B viewed from the direction C in FIG. 5(b), and FIG. 5(e) is the diagram of the unit bundle 10B viewed from the direction D in FIG. 5(d). Similarly, FIG. 6(c) is the diagram of the unit bundle 10C viewed from the direction E in FIG. 6(b), and FIG. 6(e) is the diagram of the unit bundle 10C viewed from the direction F in FIG. 6(d).

First, as shown in FIG. 4(a), the figure-8 shaped loop 11A is formed by disposing the cable 2 in the figure-8 shape. The third loop 11A includes the first and second loops 20A and 30A connected via the connecting part 12A. At this time, in the first loop 20A, the winding method of the first loop 20A is set to the "normal winding" by winding the cable 2 so that the start point 21A is located on the lower side with respect to the end point 22A. On the other hand, even in the second loop 30A, the cable 2 is wound so that the start point 31A is located on the lower side with respect to the end point 32A. When the second loop 30A is reversed thereafter, the winding method of the second loop 30A becomes the "reverse winding".

Further, when the cable 2 is disposed in the figure-8 shape, the twist 13 is formed in the vicinity of the end part 4 of the cable 2 in the first loop 20A. The twist 13 is applied to the cable 2 by twisting the cable 2 one rotation in the direction opposite to the winding direction D₂ (refer to FIG. 1) of the cable bundle 1 when viewing the cable bundle 1 from the pull-out side (end part 3 side) of the cable 2. For example, in the example shown in FIG. 1, when the cable bundle 1 is viewed from the pull-out side (end part 3 side) of the cable 2, since the winding direction D₂ of the cable bundle 1 is clockwise, the twist 13 that is counterclockwise is applied to the cable 2.

Next, as shown in FIG. 4(b) and FIG. 4(c), the figure-8 shaped third loop 11A is folded at the connecting part 12A, and the second loop 30A is stacked on the first loop 20A to form the unit bundle 10A.

Next, as shown in FIG. 4(d) and FIG. 4(e), the part 5 of the cable 2 (part 5 on the end part 3 side from the end point 32A of the second loop 30A in the cable 2) is wound by 180 degrees in the circumferential direction D₁ of the cable bundle 1. The part 5 of the cable 2 corresponds to the intermediate part 40A between the unit bundles 10A and 10B.

Next, as shown in FIG. 5(a), the figure-8 shaped third loop 11B is formed by disposing the part of the cable 2 following the part 5 in the figure-8 shape. The third loop 11B includes the first and second loops 20B and 30B connected via the connecting part 12B. At this time, in the first loop 20B, the winding method of the first loop 20B is set to the "normal winding" by winding the cable 2 so that the start point 21B is located on the lower side with respect to the end point 22B. On the other hand, even in the second loop 30B, the cable 2 is wound so that the start point 31B is located on the lower side with respect to the end point 32B. When the second loop 30B is reversed thereafter, the winding method of the second loop 30B becomes the "reverse winding". The twist 13 is not applied to the third loop 11B.

In the third loop 11B of the second stage, the first loop 20B and the second loop 30B are reverse compared to the positional relation of the first and second loops 20A and 30A in the third loop 11A of the first stage. That is, in the third loop 11A of the first stage shown in FIG. 4(a), the first loop 20A is located on the right side with respect to the second loop 30A, whereas in the third loop 11B of the second stage shown in FIG. 5(a), the first loop 20B is located on the left side with respect to the second loop 30B.

Next, as shown in FIG. 5(b) and FIG. 5(c), the figure-8 shaped third loop 11B is folded at the connecting part 12B, and the second loop 30B is stacked on the first loop 20B to form the unit bundle 10B.

Next, as shown in FIG. 5(d) and FIG. 5(e), the part 6 of the cable 2 (part 6 on the end part 3 side from the end point 22B of the first loop 20B in the cable 2) is wound by 180 degrees in the circumferential direction D₁ of the cable bundle 1. The part 6 of the cable 2 corresponds to the intermediate part 40B between the unit bundles 10B and 10C.

Next, as shown in FIG. 6(a), the figure-8 shaped third loop 11C is formed by disposing the part of the cable 2 following the part 6 in the figure-8 shape. The third loop 11C includes the first and second loops 20C and 30C connected via the connecting part 12C. At this time, in the first loop 20C, the winding method of the first loop 20C is set to the "normal winding" by winding the cable 2 so that the start point 21C is located on the lower side with respect to the end point 22C. On the other hand, even in the second loop 30C, the cable 2 is wound so that the start point 31C is located on the lower side with respect to the end point 32C. When the second loop 30C is reversed thereafter, the winding method of the second loop 30C becomes the "reverse winding". The twist 13 is also not applied to the third loop 11C.

In the third loop 11B of the second stage, the first loop 20C and the second loop 30C are reverse compared to the positional relation of the first and second loops 20B and 30B in the above-described third loop 11B of the second stage. That is, in the third loop 11B of the second stage shown in FIG. 5(a), the first loop 20B is located on the left side with respect to the second loop 30B, whereas in the third loop 11C of the third stage shown in FIG. 6(a), the first loop 20C is located on the right side with respect to the second loop 30C.

Next, as shown in FIG. 6(b) and FIG. 6(c), the figure-8 shaped third loop 11C is folded at the connecting part 12C, and the second loop 30C is stacked on the first loop 20C to form the unit bundle 10C.

Next, as shown in FIG. 6(d) and FIG. 6(e), the part 7 of the cable 2 (part 7 on the end part 3 side from the end point 22C of the first loop 20C in the cable 2) is wound by 180 degrees in the circumferential direction D₁ of the cable bundle 1. The part 7 of the cable 2 corresponds to the intermediate part 40C between the unit bundle 10C and the next unit bundle (above-described unit bundle 10B').

Thereafter, the cable bundle 1 is formed by alternately forming the unit bundle and the intermediate part in the same manner as described above. As described above, the upper unit bundles above the unit bundle 10C of FIG. 2 among the unit bundles are configured by alternately repeating the unit bundle 10B' and unit bundle 10C'. The unit bundle 10B' and the unit bundle 10C' are connected via the above-described intermediate part 40B of the cable 2. Further, the unit bundle 10C' and the unit bundle 10B' are connected via the above-described intermediate part 40C.

In the above-described manufacturing method, although forming and stacking unit bundles are repeated in order from the bottom, the manufacturing method is not particularly limited to this. For example, all of the unit bundles may be stacked after forming all of the unit bundles. Alternatively, all of the unit bundles may be formed by folding the third loops after forming all of the third loops, and then all of the unit bundles may be stacked. Alternatively, the unit bundle may be formed without undergoing the open state in the figure-8 shape.

As described above, in the present embodiment, the connecting parts (for example, the connecting parts 12A and 12B) of the unit bundles (for example, the unit bundles 10A and 10B) adjacent to each other in the stacking direction D₃ (Z direction in the drawing) of the unit bundles 10A, 10B, 10C, ... are located at different positions in the circumferential direction D₁ of the cable bundle 1. For this reason, since the upper unit bundle (for example, the unit bundle 10B) functions as a weight for the loops of the lower unit bundle (for example, the loops 20A and 30A of the unit bundle 10A), it is possible to suppress the lifting of the loops (for example, the loops 20A and 30A of the unit bundle 10A) being to be unwound later and to prevent the cable 2 from being tangled.

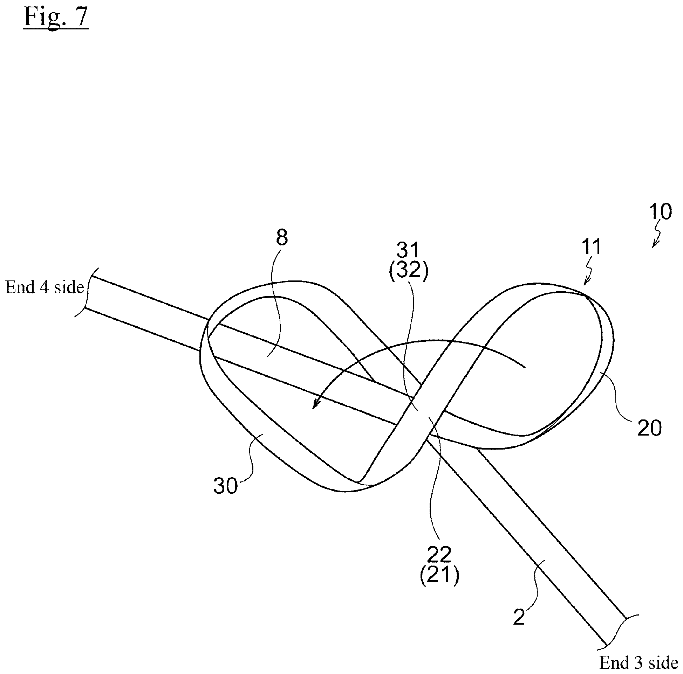

The configuration of the figure-8 shaped loop when the unit bundle is opened is not limited to the above-described configuration as long as no twist due to the unit bundle occurs in the cable when the cable is unwound. For example, it may be the figure-8 shaped loop 11 having the configuration as shown in FIG. 7. FIG. 7 is a perspective view showing the configuration of the figure-8 shaped loop 11 when the unit bundle 10 is opened in the second embodiment of the present invention.

In the example shown in FIG. 7, when the unit bundle 10 is opened, the start point 21 of the first loop 20 is located on the lower side with respect to the end point 22 of the first loop 20. Further, in the example shown in FIG. 7, when the unit bundle 10 is opened, the end point 32 of the second loop 30 is located on the lower side with respect to the start point 31 of the second loop 30 and the start point 21 of the first loop 20, and the part 8 of the cable 2 (part 8 on the end part 4 side from the start point 21 of the first loop 20 in the cable 2) passes through the second loop 30. By forming such the figure-8 shaped loop 11, no twist due to the unit bundle 10 occurs in the cable 2 when the cable 2 is unwound.

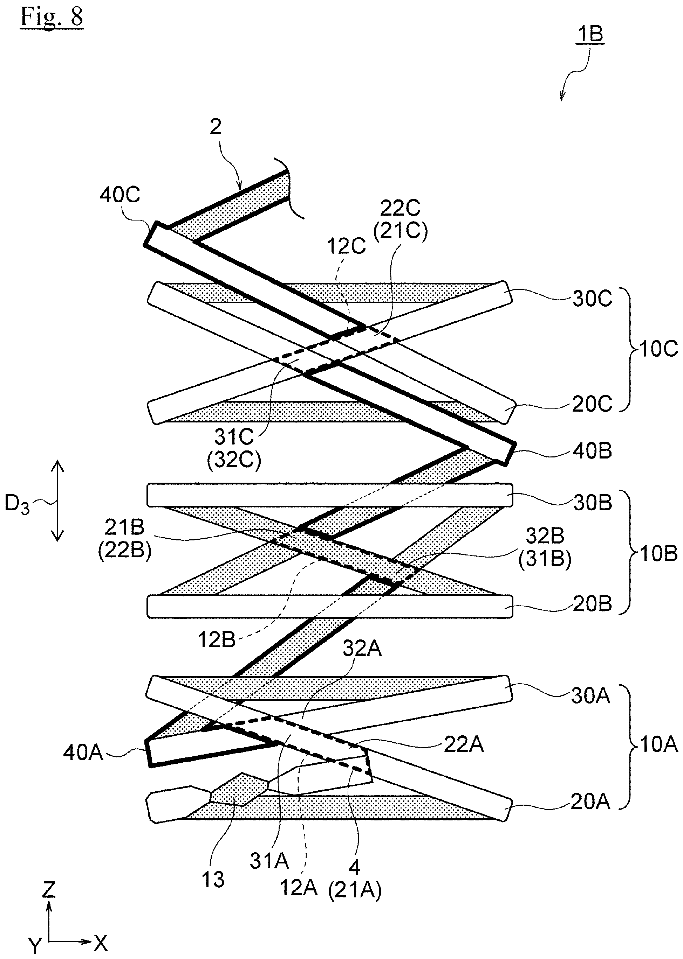

When the unit bundle 10 shown in FIG. 7 is used as unit bundles 10B and 10C, a cable bundle 1B shown in FIG. 8 is formed. Regarding the unit bundle 10B of the cable bundle 1B shown in FIG. 8, in the first loop 20B, since the cable 2 is wound so that the start point 21B is located on the upper side with respect to the end point 22B in the stacking direction D₃ (Z direction in the drawing) of the two loops 20B and 30B, the winding method of the first loop 20B is the "reverse winding". On the other hand, in the second loop 30B as well, since the cable 2 is wound so that the start point 31B is located on the upper side with respect to the end point 32B in the stacking direction D₃ (Z direction in the drawing) of the two loops 20B and 30B, the winding method of the second loop 30B is the "reverse winding". That is, the winding method of both of the first and second loops 20B and 30B is the "reverse winding". Similarly, regarding the unit bundle 10C of the cable bundle 1B shown in FIG. 8, the winding method of both of the first and second loops 20C and 30C is the "reverse winding".

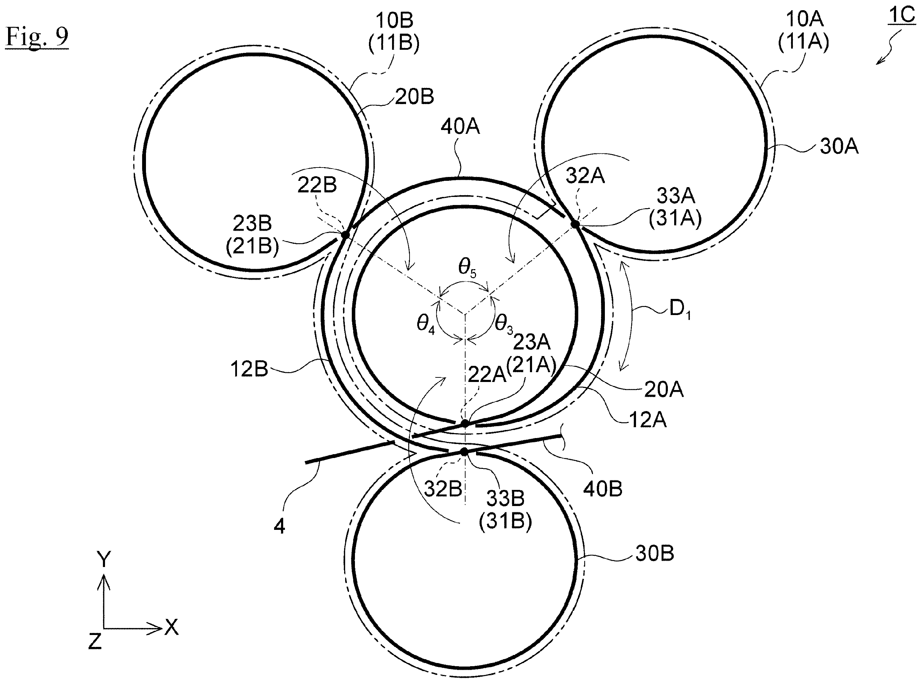

As described above, the connecting part of the unit bundle may have a length. A cable-bundle 1C in the third embodiment of the present invention will be described with reference to FIG. 9. FIG. 9 is a developed view of a part of a cable bundle 1C in the third embodiment of the present invention.

As shown in FIG. 9, the cable bundle 1C includes unit bundles 10A, 10B, ... and intermediate parts 40A, 40B, .... As described later, in the present embodiment, the cable bundle 1C is formed by twisting the cable 2 to from the individual loops in order and stacking the loops in order. Although FIG. 9 shows only two unit bundles 10A and 10B on the end part 4 side of the cable 2, the cable bundle 1C actually includes a large number of unit bundles. Further, although FIG.9 shows a state in which the unit bundles 10A and 10B are opened because FIG. 9 is a developed view of the cable bundle 1C, the unit bundles 10A, 10B, ... are actually stacked in the vertical direction (Z direction in the drawing).

The unit bundle 10A includes a first loop 20A and a second loop 30A. Since the first loop 20A is formed by winding the cable 2 so that the start point 21A is located on the upper side with respect to the end point 22A, the winding method of the first loop 20A is the "reverse winding". On the other hand, since the second loop 30A is formed by winding the cable 2 so that the start point 31A is located on the lower side with respect to the end point 32A, the winding method of the second loop 30A is the "normal winding". Since FIG. 9 shows the cable bundle 1C in an open state, the start point 31A of the second loop 30A is located on the upper side with respect to the end point 32A. The two loops 20A and 30A are stacked so that the second loop 30A is disposed on the first loop 20A in the vertical direction (Z direction in the drawing). The two loops 20A and 30A are connected to each other via the connecting part 12A so that a figure-8 shaped loop 11A including the first and second loops 20A and 30A is formed when the unit bundle 10A is opened.

In the present embodiment, the intersection 23A of the first loop 20A (the point where the start point 21A and the end point 22A intersect) does not coincide with the intersection 33A of the second loop 30A (the point where the start point 31A and the end point 32A intersect), and the intersection 33A of the second loop 30A is separated from the intersection 23A of the first loop 20A. As described above, since the connecting part 12A of the unit bundle 10A is the part of the cable 2 between the intersections 23A and 33A of the first and second loops 20A and 30A, the connection part 12A of the present embodiment has a predetermined length. The connecting part 12A is wound in the circumferential direction D₁ of the cable bundle 1C. The length of the connecting part 12A has a length corresponding to the center angle θ₃ in the circumferential direction D₁ of the cable bundle 1C. Although not particularly limited, an example of the center angle θ₃ is, for example, 120° (θ₃=120°). The central angle defining the length of the connecting part is preferably 120° or less.

The unit bundle 10B includes a first loop 20B and a second loop 30B. Since the first loop 20B is formed by winding the cable 2 so that the start point 21B is located on the upper side with respect to the end point 22B, the winding method of the first loop 20B is the "reverse winding". Since the second loop 30B is also formed by winding the cable 2 so that the start point 31B is located on the upper side with respect to the end point 32B, the winding method of the second loop 30B is also the "reverse winding". Since FIG. 9 shows the cable bundle 1C in an open state, the start point 21B of the first loop 20B is located on the lower side with respect to the end point 22B, and the start point 31B of the second loop 30B is also located on the lower side with respect to the end point 32B.

The two loops 20B and 30B are stacked so that the second loop 30B is disposed on the first loop 20B in the vertical direction (Z direction in the drawing). The two loops 20B and 30B are connected to each other via the connecting part 12B so that a figure-8 shaped loop 11B including the first and second loops 20B and 30B is formed when the unit bundle 10B is opened. The winding method of the second loop 30B may be the "normal winding".

In the present embodiment, the intersection 23B of the first loop 20B (the point where the start point 21B and the end point 22B intersect) does not coincide with the intersection 33B of the second loop 30B (the point where the start point 31B and the end point 32B intersect), and the intersection 33B of the second loop 30B is separated from the intersection 23B of the first loop 20B. As described above, since the connecting part 12B of the unit bundle 10B is the part of the cable 2 between the intersections 23B and 33B of the first and second loops 20B and 30B, the connection part 12B of the present embodiment has a predetermined length. The connecting part 12B is wound in the circumferential direction D₁ of the cable bundle 1C. The length of the connecting part 12B has a length corresponding to the center angle θ₄ in the circumferential direction D₁ of the cable bundle 1C. Although not particularly limited, an example of the center angle θ₄ is, for example, 120° (θ₄=120°).

The unit bundle 10B is stacked on the unit bundle 10A. At this time, the start point 31B and the end point 32B of the second loop 30B of the unit bundle 10B are located above the start point 21A and the end point 22A of the first loop 20A of the unit bundle 10A. The unit bundles 10A and 10B are connected via the intermediate part 40A of the cable 2. The intermediate part 40A is the part of the cable 2 that is interposed between the end point 32B of the second loop 30A of the unit bundle 10A and the start point 21B of the first loop 20B of the unit bundle 10B, and the intermediate part 40A is wound in the circumferential direction D₁ of the cable bundle 1C. The length of the intermediate part 40A has a length corresponding to the center angle θ₅ in the circumferential direction D₁ of the cable bundle 1C. Although not particularly limited, an example of the center angle θ₅ is, for example, 120° (θ₅=120°).

In the present embodiment, since each of the connecting parts 12A and 12B of the unit bundles 10A and 10B and the intermediate part 40A has a length corresponding to 120° in the circumferential direction D₁ of the cable bundle 1C, these sum forms a loop of one circumference in the circumferential direction D₁ of the cable bundle 1C. Whereas the winding method of the loop formed by the connecting parts 12A and 12B and the intermediate part 40A and the winding method of the second loop 30B of the unit bundle 10A are the "normal winding", the winding method of the first loop 20A of the unit bundle 10A and the winding method of the first loop 20B of the unit bundle 10B are the "reverse winding", and the number of the loops of the "normal winding" and the number of the loops of the "reverse winding" are the same. Therefore, since there is no twist in these four loops, there is no need to form the twist 13 described in the first embodiment in the cable bundle 1C.

In the above-described relationship in which the twist is zero, the total number of the first and second loops connected with the connecting part and the intermediate part is not particularly limited to the above as long as it is an odd number. In the above relationship in which the twist is zero, the winding method of each loop is not particularly limited to the above as long as the number of the loops of the "normal winding" and the number of the loops of the "reverse winding" are the same. The lengths of the connecting parts and the intermediate part forming the loop of one circumference in the circumferential direction D₁ of the cable bundle 1C may not be equal.

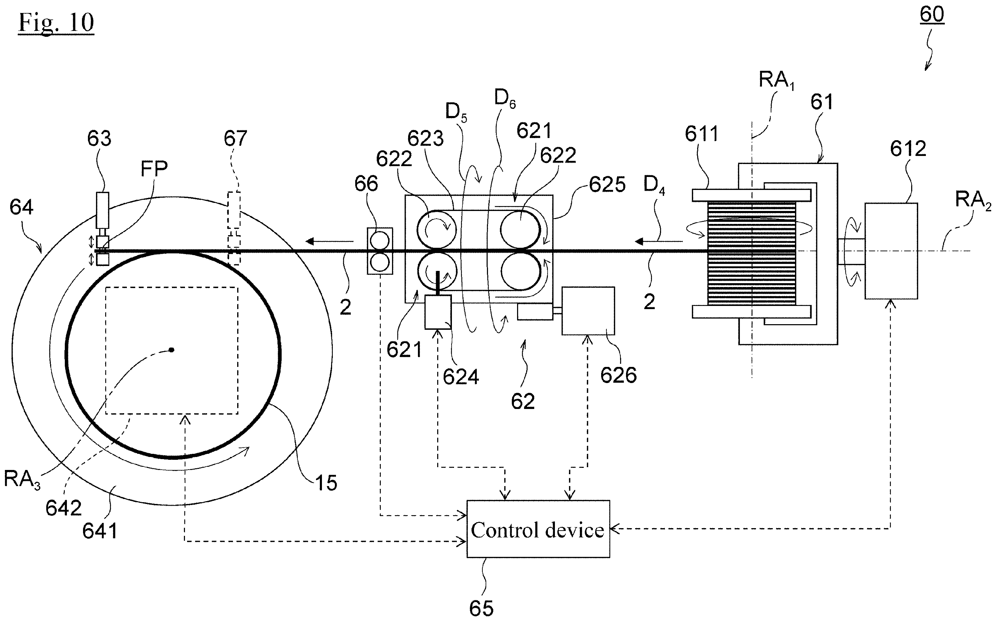

Next, the configuration of the manufacturing apparatus 60 for manufacturing the above-mentioned cable bundle 1C will be described with reference to FIG. 10. FIG. 10 is a diagram illustrating the cable bundle manufacturing apparatus 60 in the third embodiment of the present invention.

As shown in FIG. 10, the manufacturing apparatus 60 of the present embodiment includes a holding device 61, a twisting device 62, a fixing device 63, a rotating device 64, and a control device 65.

The holding device 61 holds a drum 611 around which the cable 2 is wound. The drum 611 is rotatably held by the holding device 61 about the central axial RA₁ of the drum 611. In the present embodiment, although the drum 611 is passively rotated as the cable 2 is pulled out by the caterpillar 621 of the twisting device 62, the holding device 61 may include a driving device that rotationally drives the drum 611 about the rotational axis RA₁ of the drum 611. In this case, the driving device works in conjunction with the caterpillar 621 of the twisting device 62 to positively send out the cable 2 from the drum 611.

The holding device 61 may include a rotating device 612 that rotates the drum 611 about the rotational axis RA₂ substantially parallel to the direction D₄ in which the cable 2 is send out from the drum 611. Thus, when a twist occurs in the part of the cable 2 between the drum 611 and the twisting device 62, it is possible to easily remove the twist from the cable 2. The rotational axis RA₂ is also an axis substantially perpendicular to the rotational axis RA₁ of the drum 611. The rotational axis RA₂ corresponds to an example of the "second axis" in the aspect of the present invention.

The twisting device 62 includes a pair of caterpillars 621, a frame 625, and a rotating device 626. Each of the caterpillars 621 includes a pair of pulleys 622, an endless belt 623 which is wound around the pulleys 622, and a driving device 624 that rotates the pulley 622. The pair of caterpillars 621 are arranged so that the belts 623 are in close contact with each other, and the cable 2 supplied from the drum 611 can be sandwiched between the belts 623. The driving device 624 includes a motor, a gearbox and the like that rotate the pulley 622, and the cable 2 can be pulled out from the drum 611 and the cable 2 can be pushed out from the twisting device 62 by driving the caterpillar 621. The pair of caterpillars 621 corresponds to an example of the "sending device" in aspects of the present invention.

The pair of caterpillars 621 is housed in the frame 625. The rotating device 626 includes a motor, a gearbox and the like that rotate the frame 625. The rotating device 626 is capable of twisting the cable 2 held between the pair of caterpillars 621 by rotating the frame 625 around the axial direction of the cable 2. The rotating device 626 is capable of rotating the frame 625 by 360° in one rotational direction D₅ and is capable of rotating the frame 625 by 360° in the other rotational direction D₆. The one rotational direction D₅ corresponds to an example of the "third direction" in the aspect of the present invention, and the other rotational direction D₆ corresponds to an example of the "fourth direction" in the aspect of the present invention.

The configuration of the twisting device 62 is not particularly limited to the above as long as it includes a function of sending out the cable 2 and a function of twisting the cable 2. Although not particularly shown, for example, the twisting device 62 may include a gripping part that grips the cable and a moving part that moves the gripping part in the axial direction of the cable 2, and the gripping part may include rollers capable of twisting the cable. Although not particularly shown, the function of sending out the cable 2 and the function of twisting the cable 2 may be realized by mutually independent devices.

The fixing device 63 is a device that fixes the cable 2 sent out from the twisting device 62. Although not particularly limited, a specific example of the fixing device 63 is a clamp that pinches and fixes the fixed position FP of the cable 2 by using an air cylinder or the like. The fixing device 63 fixes the movement of the cable 2 in the axial direction at the fixed position FP on the cable 2. The fixed position FP is the position on the cable 2 that is separated from the twisting device 62 by a predetermined distance. This predetermined distance is a distance that allows one loop 15 (for example, the first loop 20A) of the cable 2 to be formed between the fixed position FP and the twisting device 62.

When the cable 2 is send out toward the fixed position FP by the caterpillars 621 of the twisting device 62 and the rotating device 626 of the twisting device 62 rotates in one rotational direction D₅ in a state where the fixing device 63 fixes the fixing position FP on the cable, the "reverse winding" loop is formed. On the other hand, when the pair of caterpillars 621 rotate the frame 625 in the other rotational D₆, the "normal winding" loop is formed.

The rotating device 64 includes a placement table 641 and a driving device 642. The loops 15 formed by the twisting device 62 are placed on the placement table 641 and stacked. The placement table 641 includes a placement surface on which the loops 15 of the cable 2 are placed. The driving device 642 includes a motor, a gear box and the like that rotate the placement surface of the placement table 641. The driving device is capable of rotating the placement surface of the placement table 641 about a rotational axis RA₃ substantially parallel to the normal direction of the placement table 641. The rotational axis RA₃ corresponds to an example of the "first axis" in the aspect of the present embodiment. In the example shown in FIG. 10, although the driving device 642 rotates the placement surface of the placement table 641 only counterclockwise, the driving device 642 may rotate the placement surface of the placement table 641 in both clockwise and counterclockwise directions.

The control device 65 includes, for example, a computer. Although not particularly shown, the computer is an electronic computer including a CPU (processor), a main storage device (such as a RAM), a secondary storage device (such as a hard disk and a SSD), interfaces, and the like. The control device 65 is controllably connected to the driving device 624 and the rotating device 626 of the twisting device 62, the fixing device 63, and the driving device 642 of the rotating device 64. These controls are functionally realized, for example, by the control device 65 executing a program. The control device 65 may be configured with a circuit board instead of the computer.

Next, a manufacturing process for manufacturing the cable bundle 1C shown in FIG. 9 using the manufacturing device 60 described above will be described.

First, in a state where the cable 2 is pulled out from the twisting device 62 to the fixing device 63, the control device 65 transmits a control signal to the fixing device 63, and the fixing device 63 pinches the fixed position FP on the cable 2. Therefore, the movement of the cable 2 in the axial direction at the fixed position FP on the cable 2 is fixed by the fixing device 63.

Next, the control device 65 transmits a control signal to the driving device 624 of the twisting device 62, and the caterpillars 621 send out the cable 2 from the twisting device 62 by a predetermined amount. This predetermined amount is a length corresponding to one loop 15 of the cable 2 and is a value input to the control device 65 in advance.

Next, the control device 65 sends a control signal to the rotating device 626 of the twisting device 62, and the rotating device 626 rotates the frame 625 by 360° in one rotational direction D₅ to twist the cable 2, therefore the first loop 20A of the "reverse winding" is formed. The first loop 20A is placed on the placement table 641 of the rotating device 64. The twisting device 62 may twist the cable 2 while sending out a predetermined amount of the cable 2.

Next, the control device 65 transmits a control signal to the fixing device 63, and the fixing device 63 loosens the fixing of the cable 2 to release the cable 2. Next, the control device 65 transmits control signals to the driving device 642 of the rotating device 64 and the driving device 624 of the twisting device 62. As a result, the driving device 642 rotates the placement surface of the placement table 641 by the center angle θ₃, and simultaneously, the caterpillars 621 sends out the cable 2 from the twisting device 62 by a predetermined amount. This predetermined amount is a length corresponding to the center angle θ₃ in the circumferential direction D₁ of the cable bundle 1C and is a value input to the control device 65 in advance. Although not particularly limited, in the present embodiment, the center angle θ₃ is 120° (θ₃=120°). As a result, the connecting part 12A of the unit bundle 10A in the cable bundle 1C is formed.

Next, the second loop 30A of the unit bundle 10A is formed in the same manner as the first loop 20A described above. At this time, the rotating device 626 rotates the frame 625 by 360° in other rotational direction D₆ to twist the cable 2, therefore the second loop 30A of the "normal winding" is formed. The second loop 30A is placed on the placement table 641 of the rotating device 64 to form the unit bundle 10A. The twisting device 62 may twist the cable 2 while sending out a predetermined amount of the cable 2.

Next, the control device 65 transmits a control signal to the fixing device 63, and the fixing device 63 loosens the fixing of the cable 2 to release the cable 2. Next, the control device 65 transmits control signals to the driving device 642 of the rotating device 64 and the driving device 624 of the twisting device 62. As a result, the driving device 642 rotates the placement surface of the placement table 641 by the center angle θ₄, and simultaneously, the caterpillars 621 sends out the cable 2 from the twisting device 62 by a predetermined amount. This predetermined amount is a length corresponding to the center angle θ₄ in the circumferential direction D₁ of the cable bundle 1C and is a value input to the control device 65 in advance. Although not particularly limited, in the present embodiment, the center angle θ₄ is 120° (θ₄=120°). As a result, the intermediate part 40A between the unit bundles 10A and 10B in the cable bundle 1C is formed.

Thereafter, the cable bundle 1C is formed by alternately forming the unit bundle and the intermediate part in the same manner as described above. If a twist occurs in the part of the cable 2 between the drum 611 and the twisting device 62, it is possible to remove the twist by rotating the drum 611 using the above-described rotating device 612.

As described above, in the manufacturing apparatus 60 of the present embodiment, since the driving device 642 of the rotating device 64 rotates the placement surface of the placement table 641 on which the loops 15 of the cable 2 are placed, it is possible to manufacture the cable bundle 1C that includes the connecting parts 12A and 12B located at different positions in the circumferential direction D₁.

The manufacturing apparatus 60 may include a measuring device 66 that measures the length of the cable 2 sent out by the twisting device 62. In this case, the control device 65 may control the driving device 624 of the twisting device 62 so that the caterpillars 621 send out the cable 2 from the twisting device 62 by a predetermined amount based on the measurement result of the measuring device 66. Although not particularly limited, an encoder can be exemplified as a specific example of the measurement device 66. Alternatively, the length of the cable 2 sent out from the twisting device 62 may be measured by the measuring device 66 to perform quality control of the cable bundle 1.

The cable bundle 1 shown in FIG. 1 may be manufactured using the manufacturing apparatus 60 described above. In this case, as shown in FIG. 10, the manufacturing apparatus 60 includes an additional fixing device 67 in addition to the above-described fixing device 63. The additional fixing device 67 has a configuration similar to that of the fixing device 63 described above. When forming each unit bundle, the fixing device 63 is used to form the first loop, and the additional fixing device 67 is used to form the second loop.

It should be noted that the embodiment described above are described to facilitate understanding of the present disclosure and are not described to limit the present invention. It is therefore intended that the elements disclosed in the above embodiment include all design modifications and equivalents that fall within the scope of the invention that is defined by the appended claims.

For example, although the cable bundle 1 has the drumless structure that does not have a winding core in the above-described embodiment, the cable bundle 1 is not particularly limited to this. The cable bundle 1 may have a winding core, or the cable bundle 1 may be formed around the guide pin for sending out.

In the above-described embodiment, although the unit bundles 10A, 10B, 10C, ... are stacked in a direction (the stacking direction D₃ of the unit bundles (Z direction in the drawing)) perpendicular to the radial direction, it is not limited to this. For example, the unit bundles having different diameters disposed on the same plane may be stacked in the stacking direction D₃ by appropriately changing the size of the diameters of the loop included in the unit bundle. Alternatively, other unit bundles each of which has a diameter larger than the diameter of the unit bundle may be stacked in the stacking direction D₃ on the outer side of the unit bundles stacked in the stacking direction D₃ by appropriately changing the size of the diameters of the loop included in the unit bundle.

The connecting parts of the unit bundles may be located at different positions in the circumferential direction D₁ of the cable bundle 1 by making the diameters of the unit bundles adjacent to the stacking direction D₃ of the unit bundles different. The first intersection and the second intersection may be located at different positions in the circumferential direction D₁ of the cable bundle 1 by making the diameters of the first and second loops of the unit bundle different.

### [EXPLANATIONS OF LETTERS OR NUMERALS]

- 1, 1B, 1C: Cable bundle
- 2: Cable
- 3, 4: End
- 10A, 10B, 10C: Unit bundle
- 11A, 11B, 11C: Figure-8 shaped loop
- 12A, 12B, 12C: Connecting part
- 13: Twist
- 20A, 20B, 20C: First loop
- 21A, 21B, 21C: Start point
- 22A, 22B, 22C: End point
- 23A, 23B: Intersection
- 30A, 30B, 30C: Second loop
- 31A, 31B, 31C: Start point
- 32A, 32B, 32C: End point
- 33A, 33B: Intersection
- 40A, 40B: Intermediate part
- 50: Container
- 51: Upper surface
- 52: Opening
- 60: Manufacturing apparatus
- 61: Holding device
- 611: Drum
- 612: Rotating device
- 62: Twisting device
- 621: Caterpillar
- 622: Pulley
- 623: Belt
- 624: Driving device
- 625: Frame
- 626: Rotating device
- 63: Fixing device
- 64: Rotating device
- 641: Placement table
- 642: Driving device
- 65: Control device
- 66: Measuring device
- 67: Fixing device

## Claims

1. A cable bundle (1, 1B, 1C ... ) comprising a cable (2) that is wound, the cable bundle (1, 1B, 1C ... ) comprising unit bundles (10A, 10B, 10C ... ) stacked in a second direction perpendicular to a first direction that is a circumferential direction of the cable bundle (1, 1B, 1C ... ), wherein
each of the unit bundles (10A, 10B, 10C ... ) comprises a first loop (20A, 20B, 20C ... ) and a second loop (30A, 30B, 30C ...) that are stacked in the second direction,
the first loop (20A, 20B, 20C ... ) and the second loop (30A, 30B, 30C ...) are connected via a connecting part (12A, 12B, 12C ...) so that a figure-8 shaped loop including the first loop (20A, 20B, 20C ... ) and the second loop (30A, 30B, 30C ...) is formed when each of the unit bundles is opened, **characterized in that**
connecting parts (12A, 12B, 12C ...) of the unit bundles (10A, 10B, 10C ... ) adjacent in the second direction are located at different positions in the first direction, and each of the connecting parts (12A, 12B, 12C ...) is the connecting part.

2. The cable bundle according to claim 1, comprising an intermediate part (40A, 40B ... ) which is interposed between the unit bundles (10A, 10B, 10C ... ) and connects the unit bundles, wherein
the intermediate part (40A, 40B ... ) is wound in the first direction so that the connecting parts (12A, 12B, 12C ...) of the unit bundles adjacent in the second direction are located at different positions within a range of 90 degrees to 270 degrees in the first direction.

3. The cable bundle according to claim 1 or 2, wherein,
the unit bundles include:
a first unit bundle (10A);
a second unit bundle (10B) stacked on the first unit bundle; and
a third unit bundle (10C) stacked on the second unit bundle,
the cable bundle comprises:
a first intermediate part (40A) that is interposed between the first unit bundle (10A) and the second unit bundle (10B) and connects the first unit bundle and the second unit bundle; and
a second intermediate part (40B) that is interposed between the second unit bundle (10B) and the third unit bundle (10C) and connects the second unit bundle and the third unit bundle,
the first intermediate part (40A) and the second intermediate part (40B) are wound in the first direction, and
the first intermediate part (40A) and the second intermediate part (40B) are located at different positions in the first direction.

4. The cable bundle according to any one of claims 1 to 3, comprising an intermediate part (40A, 40B ... ) which is interposed between the unit bundles (10A, 10B, 10C ... ) , connects the unit bundles and is wound in the first direction, wherein
the cable has an opposite twist opposite to a twist caused by the intermediate part (40A, 40B ... ) when the cable is unwound.

5. The cable bundle according to claim 4, wherein
the rotation number of opposite twists that the cable has is less than or equal to a value obtained by dividing a total length of intermediate parts (40A, 40B ... ) by an average circumferential length of the cable bundle, each of the intermediate parts is the intermediate part, and each of the opposite twists is the opposite twist.

6. The cable bundle according to any one of claims 1 to 3, wherein
the connecting part (12A, 12B, 12C ...) is a part of the cable between a first intersection of the first loop (20A, 20B, 20C ... ) and a second intersection of the second loop (30A, 30B, 30C ... ), and the connecting part is wound in the first direction.

7. The cable bundle according to claim 6, wherein
the connecting parts (12A, 12B, 12C ...) included in the unit bundles (10A, 10B, 10C ... ) adjacent in the second direction and an intermediate part (40A, 40B ... ) connecting the unit bundles form one circumference in the first direction.

8. The cable bundle according to any one of claims 1 to 7, wherein
the first loop (20A, 20B, 20C ... ) is formed by winding the cable in a normal winding or a reverse winding opposite to the normal winding, and
the second loop (30A, 30B, 30C ... ) is formed by winding the cable in the reverse winding or the normal winding.

9. A method of manufacturing a cable bundle (1, 1B, 1C ... ) comprising a cable (2) that is wound, the method comprising:
a first step of forming unit bundles (10A, 10B, 10C ... ) each of which comprises a first loop (20A, 20B, 20C ... ) and a second loop (30A, 30B, 30C ... ) that are connected via a connecting part and are stacked; and
a second step of stacking the unit bundles (10A, 10B, 10C ... ) so that connecting parts (12A, 12B, 12C ...) are located at different positions in a first direction that is a circumferential direction of the cable bundle, each of the connecting parts being the connecting part, **characterized in that**
the first loop (20A, 20B, 20C ...) and the second loop (30A, 30B, 30C ... ) are connected via the connecting part so that a figure-8 shaped loop including the first loop and the second loop is formed when each of the unit bundles (10A, 10B, 10C ... ) is opened.

10. The method of manufacturing the cable bundle according to claim 9, wherein
the first step comprises:
forming third loops each of which comprises the first loop (20A, 20B, 20C ... ) and the second loop (30A, 30B, 30C ... ) connected via the connecting part (12A, 12B, 12C ...) by disposing the cable in a figure-8 shape; and
forming the unit bundles by folding each of the third loops at the connecting part and stacking the first loop and the second loop.

11. The method of manufacturing the cable bundle according to claim 9, wherein
the first step comprises:
forming the first loop (20A, 20B, 20C ... ) by twisting the cable in a third direction;
forming the second loop (30A, 30B, 30C ... ) by twisting the cable in a fourth direction opposite to the third direction; and
forming each of the unit bundles (10A, 10B, 10C ... ) by stacking the first loop and the second loop.

12. The method of manufacturing the cable bundle according to any one of claims 9 to 11, wherein
the cable bundle comprises an intermediate part (40A, 40B, ...) which is interposed between the unit bundles (10A, 10B, 10C ... ) and connects the unit bundles, and
the second step comprises winding the intermediate part (40A, 40B, ...) in the first direction so that the connecting parts of the unit bundles adjacent are located at different positions within a range of 90 degrees to 270 degrees in the first direction.

13. A cable bundle manufacturing apparatus that manufactures a cable bundle (1, 1B, 1C ... ) comprising a cable (2) that is wound, the cable bundle manufacturing apparatus comprising:
a fixing device (67) that fixes a movement of the cable in an axial direction at a fixed position on the cable;
a sending device that sends out the cable toward the fixed position;
a twisting device (62) that forms a loop of the cable by twisting the cable sent out by the sending device; and
a first rotating device that has a placement surface on which the loop formed by the twisting device is placed and stacked and rotates the placement surface about a first axis substantially parallel to a normal direction of the placement surface, **characterized in that**
the twisting device (62) forms a first loop (20A, 20B, 20C ... ) by twisting the cable in a third direction and forms a second loop (30A, 30B, 30C ... ) by twisting the cable in a fourth direction opposite to the third direction.

14. A cable bundle manufacturing apparatus that manufactures a cable bundle (1, 1B, 1C ... ) comprising a cable (2) that is wound, the cable bundle manufacturing apparatus comprising:
a fixing device (67) that fixes a movement of the cable in an axial direction at a fixed position on the cable;
a sending device that sends out the cable toward the fixed position;
a twisting device (62) that forms a loop of the cable by twisting the cable sent out by the sending device; and
a first rotating device that has a placement surface on which the loop formed by the twisting device is placed and stacked and rotates the placement surface about a first axis substantially parallel to a normal direction of the placement surface, **characterized by**
a second rotating device (612) that rotates a drum (611) that supplies the cable about a second axis that is substantially parallel to a direction in which the cable is sent out from the drum.

## Patentansprüche

1. Ein Kabelbündel (1, 1B, 1C ...) mit einem gewickelten Kabel (2), und Einheitsbündeln (10A, 10B, 10C ...), die in einer zu einer ersten Richtung orthogonalen zweiten Richtung gestapelt sind, wobei die erste Richtung eine Umfangsrichtung des Kabelbündels (1, 1B, 1C ...) ist, wobei
jedes der Einheitsbündel (10A, 10B, 10C ... ) eine erste Schleife (20A, 20B, 20C ...) und eine zweite Schleife (30A, 30B, 30C ...) aufweist, die in der zweiten Richtung gestapelt sind,
die erste Schleife (20A, 20B, 20C ...) und die zweite Schleife (30A, 30B, 30C ...) über ein verbindendes Teil (12A, 12B, 12C ...) so verbunden sind, dass eine acht-förmige Schleife einschließlich der ersten (20A, 20B, 20C ...) und der zweiten Schleife (30A, 30B, 30C ...) entsteht, wenn jedes der Einheitsbündel geöffnet wird, **dadurch gekennzeichnet, dass**
der verbindende Teile der Einheitsbündel (10A, 10B, 10C ...), die einander in der zweiten Richtung benachbart sind, sich in der ersten Richtung in verschiedenen Positionen befinden, und dass jedes dieser verbindenden Teile ist das verbindende Teil (12A, 12B, 12C ...) ist.

2. Das Kabelbündel gemäß Anspruch 1, mit einem Zwischenteil (40A, 40B ...) das zwischen den Einheitsbündeln (10A, 10B, 10C ...) eingefügt ist und die Einheitsbündel verbindet, wobei
das Zwischenteil (40A, 40B ...) so in der ersten Richtung gewickelt ist, dass die verbindenden Teile (12A, 12B, 12C ...) der in der zweiten Richtung benachbarten Einheitsbündel sich in der ersten Richtung an verschiedenen Positionen innerhalb eines Bereichs von 90 Grad bis 270 Grad befinden.

3. Das Kabelbündel gemäß Anspruch 1 oder 2, bei dem
die Einheitsbündel umfassen:
ein erstes Einheitsbündel (10A);
ein zweites Einheitsbündel (10B), das auf das erste Einheitsbündel gestapelt ist; und
ein drittes Einheitsbündel (10C), das auf das zweite Einheitsbündel gestapelt ist,
wobei das Kabelbündel umfasst:
ein erstes Zwischenteil (40A), das zwischen dem ersten Einheitsbündel (10A) und dem zweiten Einheitsbündel (10B) eingefügt ist und das erste Einheitsbündel mit dem zweiten Einheitsbündel verbindet; und
ein zweites Zwischenteil (40B), das zwischen dem zweiten Einheitsbündel (10B) und dem dritten Einheitsbündel (10C) eingefügt ist und das zweite Einheitsbündel mit dem dritten Einheitsbündel verbindet,
wobei das erste Zwischenteil (40A) und das zweite Zwischenteil (40B) in der ersten Richtung gewickelt sind, und
das erste Zwischenteil (40A) und das zweite Zwischenteil (40B) sich in der ersten Richtung an verschiedenen Positionen befinden.

4. Das Kabelbündel gemäß einem der Ansprüche 1 bis 3, mit einem Zwischenteil (40A, 40B ...), das zwischen den Einheitsbündeln (10A, 10B, 10C ...) eingefügt ist, die Einheitsbündel verbindet und ist in der ersten Richtung gewickelt ist, wobei
das Kabel in einer Richtung verdrillt ist, die der Verdrillung entgegengesetzt ist, die durch das Zwischenteil (40A, 40B ... ) verursacht wird, wenn das Kabel abgewickelt wird.

5. Das Kabelbündel gemäß Anspruch 4, bei dem
die Verdrillungszahl der entgegengesetzten Verdrillungen des Kabels, kleiner oder gleich einem Wert ist, den man erhält, wenn man die Gesamtlänge der Zwischenteile (40A, 40B ... ) durch eine durchschnittliche Umfangslänge des Kabelbündels dividiert, wobei jedes der Zwischenteile das Zwischenteil ist und jede der entgegengesetzten Verdrillungen die entgegengesetzte Verdrillung ist.

6. Das Kabelbündel gemäß einem der Ansprüche 1 bis 3, bei dem
das Verbindungsteil (12A, 12B, 12C ...) ist ein Teil des Kabels zwischen einer ersten Kreuzung der ersten Schleife (20A, 20B, 20C ...) und einer zweiten Kreuzung der zweiten Schleife (30A, 30B, 30C ...) ist und das Verbindungsteil in der ersten Richtung gewickelt ist.

7. Das Kabelbündel gemäß Anspruch 6, bei dem
die verbindenden Teile (12A, 12B, 12C ...), die in den Einheitsbündeln (10A, 10B, 10C ...) enthalten und einander in der zweiten Richtung benachbart sind, und ein Zwischenteil (40A, 40B ...), das die Einheitsbündel verbindet, einen Umfang in der ersten Richtung bilden.

8. Das Kabelbündel gemäß einem der Ansprüche 1 bis 7, bei dem
die erste Schleife (20A, 20B, 20C ...) durch Wickeln des Kabels in eine normalen Wickelrichtung oder einer umgekehrten Wickelrichtung entgegengesetzt zu der normalen Wickelrichtung gebildet ist, und
die zweite Schleife (30A, 30B, 30C ...) Wickeln des Kabels in der umgekehrten Wickelrichtung oder der normalen Wickelrichtung gebildet ist.

9. Eine Verfahren zur Herstellung eines Kabelbündels (1, 1B, 1C ... ) mit einem gewickelten Kabel (2), welches Verfahren umfasst:
einen ersten Schritt bestehend aus der Bildung von Einheitsbündeln (10A, 10B, 10C ...), von denen jedes eine erste Schleife (20A, 20B, 20C ...) und eine zweite Schleife (30A, 30B, 30C ...) aufweist, die über ein verbindendes Teil verbunden und aufeinander gestapelt sind; und
einen zweiten Schritt des Stapelns der Einheitsbündel (10A, 10B, 10C ...) derart, dass verbindende Teile (12A, 12B, 12C ...) sich in einer ersten Richtung, die eine Umfangsrichtung des Kabelbündels ist, in verschiedenen Positionen befinden, wobei jeder der verbindenden Teile der verbindende Teil ist, **dadurch gekennzeichnet, dass**
die erste Schleife (20A, 20B, 20C ...) und die zweite Schleife (30A, 30B, 30C ... ) so über das Verbindungsteil verbunden sind, dass eine acht-förmige Schleife entsteht, die die erste und die zweite Schleife einschließt, wenn jedes der Einheitsbündel (10A, 10B, 10C ...) geöffnet wird.

10. Das Verfahren zur Herstellungs des Kabelbündels gemäß Anspruch 9, bei dem
der erste Schritt umfasst:
die Bildung von dritten Schleifen, von denen jede die erste (20A, 20B, 20C ...) und die zweite Schleife (30A, 30B, 30C ...) umfasst, die über das Verbindungsteil (12A, 12B, 12C ...) verbunden sind, durch Anordnen des Kabels in einer acht-förmigen Konfiguration ; und
Bilden der Einheitsbündel, indem jede der dritten Schleifen in dem verbindenden Teil gefaltet wird und die erste und zweite Schleife gestapelt werden.

11. Das Verfahren zur Herstellungs des Kabelbündels gemäß Anspruch 9, bei der
der erste Schritt umfasst:
Bilden der ersten Schleife (20A, 20B, 20C ... ), indem das Kabel in einer dritten Richtung verdrillt wird;
Bilden der zweite Schleife (30A, 30B, 30C ...), indem das Kabel in einen vierten Richtung entgegengesetzt zu der dritten Richtung verdrillt wird; und
Bilden jedes der Einheitsbündel (10A, 10B, 10C ... ) durch das Stapeln der ersten und der zweiten Schleife.

12. Das Verfahren zur Herstellung des Kabelbündels gemäß einem der Ansprüche 9 bis 11, bei dem
das Kabelbündel ein Zwischenteil (40A, 40B, ...) aufweist, das zwischen den Einheitsbündeln (10A, 10B, 10C ...) eingefügt ist und die Einheitsbündel verbindet, und
der zweite Schritt das Wickeln , des Zwischenteils (40A, 40B, ...) in der ersten Richtung aufweist, derart, dass die verbindenden Teile der benachbarten Einheitsbündel sich in der ersten Richtung an verschiedenen Positionen innerhalb eines Bereichs von 90 Grad bis 270 Grad befinden.

13. Eine Vorrichtung zur Herstellung eines Kabelbündels (1, 1B, 1C ...), das aus ein gewickeltes Kabel (2) aufweist, wobei die Vorrichtung aufweist:
ein Befestigungsgerät (67), das eine Bewegung des Kabels in axialer Richtung in einer festen Position fixiert;
ein Zuführgerät, das das Kabel in die feste Position zuführt;
eine Verdrillungseinrichtung (62), die eine Schleife des Kabels bildet, indem es das vom Zuführgerät zugeführte Kabel verdrillt; und
ein erstes rotierendes Gerät, das eine Platzierungsfläche besitzt, auf der die von der Verdrillungseinrichtung gebildete Schleife platziert und gestapelt wird, und das die Platzierungsfläche um eine erste Achse dreht, die wesentlich parallel zu einer Normalen-Richtung der Platzierungsfläche ist, **dadurch gekennzeichnet, dass**
die Verdrillungseinrichtung (62) eine erste Schleife (20A, 20B, 20C ...) bildet, indem es das Kabel in einer dritten Richtung dreht, und eine zweite Schlaufe (30A, 30B, 30C ...) bildet durch das Drehen des Kabels in einer vierten Richtung entgegengesetzt zur dritten Richtung.

14. Eine Vorrichtung zur Herstellung eines Kabelbündels (1, 1B, 1C ...), das aus ein gewickeltes Kabel (2) aufweist, wobei die Vorrichtung aufweist:
ein Befestigungsgerät (67), das eine Bewegung des Kabels in axialer Richtung in einer festen Position fixiert;
ein Zuführgerät, das das Kabel in die feste Position zuführt;
eine Verdrillungseinrichtung (62), die eine Schleife des Kabels bildet, indem es das von der Verdrillungseinrichtung zugegührte Kabel verdrillt; und
ein erstes rotierendes Gerät, das eine Platzierungsfläche besitzt, auf der die durch die Verdrillungseinrichtung gebildete Schleife platziert und gestapelt wird, und das die Platzierungsfläche um eine erste Achse dreht, die wesentlich parallel zu einer Normalen-Richtung der Platzierungsfläche ist, **gekennzeichnet durch**
ein zweites rotierendes Gerät (612), das eine Trommel (611) dreht, die das Kabel um eine zweite Achse versorgt, die weitgehend parallel zu der Richtung verläuft, in der das Kabel aus der Trommel austritt.

## Revendications

1. Faisceau de câbles (1, 1B, 1C, ...) comportant un câble (2) qui est enroulé, le faisceau de câbles (1, 1B, 1C, ...) comportant des faisceaux unitaires (10A, 10B, 10C, ...) empilés dans une deuxième direction perpendiculaire à une première direction qui est une direction circonférentielle du faisceau de câbles (1, 1B, 1C, ...) , dans lequel
chacun des faisceaux unitaires (10A, 10B, 10C, ...) comporte une première boucle (20A, 20B, 20C, ...) et une deuxième boucle (30A, 30B, 30C, ...) qui sont empilées dans la deuxième direction,
la première boucle (20A, 20B, 20C, ...) et la deuxième boucle (30A, 30B, 30C, ...) sont reliées par une partie de liaison (12A, 12B, 12C, ...) de sorte qu'une boucle en forme de chiffre 8 incluant la première boucle (20A, 20B, 20C, ...) et la deuxième boucle (30A, 30B, 30C, ...) est formée lorsque chacun des faisceaux unitaires est ouvert, **caractérisé en ce que**
des parties de liaison (12A, 12B, 12C, ...) des faisceaux unitaires (10A, 10B, 10C, ...) adjacents dans la deuxième direction sont situées à différentes positions dans la première direction, et chacune des parties de liaison (12A, 12B, 12C, ...) est la partie de liaison.

2. Faisceau de câbles selon la revendication 1, comportant une partie intermédiaire (40A, 40B, ...) qui est intercalée entre les faisceaux unitaires (10A, 10B, 10C, ...) et relie les faisceaux unitaires, dans lequel
la partie intermédiaire (40A, 40B, ...) est enroulée dans la première direction de sorte que les parties de liaison (12A, 12B, 12C, ...) des faisceaux unitaires adjacents dans la deuxième direction sont situées à différentes positions sur un intervalle de 90 degrés à 270 degrés dans la première direction.

3. Faisceau de câbles selon la revendication 1 ou 2, dans lequel
les faisceaux unitaires incluent :
un premier faisceau unitaire (10A) ;
un deuxième faisceau unitaire (10B) empilé sur le premier faisceau unitaire ; et
un troisième faisceau unitaire (10C) empilé sur le deuxième faisceau unitaire,
le faisceau de câbles comporte :
une première partie intermédiaire (40A) qui est intercalée entre le premier faisceau unitaire (10A) et le deuxième faisceau unitaire (10B) et relie le premier faisceau unitaire et le deuxième faisceau unitaire ; et
une seconde partie intermédiaire (40B) qui est intercalée entre le deuxième faisceau unitaire (10B) et le troisième faisceau unitaire (10C) et relie le deuxième faisceau unitaire et le troisième faisceau unitaire,
la première partie intermédiaire (40A) et la seconde partie intermédiaire (40B) sont enroulées dans la première direction, et
la première partie intermédiaire (40A) et la seconde partie intermédiaire (40B) sont situées à différentes positions dans la première direction.

4. Faisceau de câbles selon l'une quelconque des revendications 1 à 3, comportant une partie intermédiaire (40A, 40B, ...) qui est intercalée entre les faisceaux unitaires (10A, 10B, 10C, ...), relie les faisceaux unitaires et est enroulée dans la première direction, dans lequel
le câble présente une torsion opposée à une torsion induite par la partie intermédiaire (40A, 40B, ...) lorsque le câble est déroulé.

5. Faisceau de câbles selon la revendication 4, dans lequel
le nombre de tours de torsions opposées que le câble effectue est inférieur ou égal à une valeur obtenue en divisant une longueur totale des parties intermédiaires (40A, 40B, ...) par une longueur circonférentielle moyenne du faisceau de câbles, chacune des parties intermédiaires est la partie intermédiaire et chacune des torsions opposées est la torsion opposée.

6. Faisceau de câbles selon l'une quelconque des revendications 1 à 3, dans lequel
la partie de liaison (12A, 12B, 12C, ...) est une partie du câble entre une première intersection de la première boucle (20A, 20B, 20C, ...) et une seconde intersection de la deuxième boucle (30A, 30B, 30C, ...), et la partie de liaison est enroulée dans la première direction.

7. Faisceau de câbles selon la revendication 6, dans lequel
les parties de liaison (12A, 12B, 12C, ...) incluses dans les faisceaux unitaires (10A, 10B, 10C, ...) adjacents dans la deuxième direction et une partie intermédiaire (40A, 40B, ...) reliant les faisceaux unitaire forment une circonférence dans la première direction.

8. Faisceau de câbles selon l'une quelconque des revendications 1 à 7, dans lequel
la première boucle (20A, 20B, 20C, ...) est formée en enroulant le câble dans un enroulement normal ou un enroulement inverse opposé à l'enroulement normal, et
la deuxième boucle (30A, 30B, 30C, ...) est formée en enroulant le câble dans l'enroulement inverse ou l'enroulement normal.

9. Procédé de fabrication d'un faisceau de câbles (1, 1B, 1C, ...) comportant un câble (2) qui est enroulé, le procédé comportant :
une première étape consistant à former des faisceaux unitaires (10A, 10B, 10C, ...) dont chacun comporte une première boucle (20A, 20B, 20C, ...) et une deuxième boucle (30A, 30B, 30C, ...) qui sont reliées par une partie de liaison et sont empilées ; et
une seconde étape consistant à empiler les faisceaux unitaires (10A, 10B, 10C, ...) de sorte que des parties de liaison (12A, 12B, 12C, ...) sont situées à différentes positions dans une première direction qui est une direction circonférentielle du faisceau de câbles, chacune des parties de liaison étant la partie de liaison, **caractérisé en ce que**
la première boucle (20A, 20B, 20C, ...) et la deuxième boucle (30A, 30B, 30C, ...) sont reliées par la partie de liaison de sorte qu'une boucle en forme de chiffre 8 incluant la première boucle et la deuxième boucle est formée lorsque chacun des faisceaux unitaires (10A, 10B, 10C, ...) est ouvert.

10. Procédé de fabrication du faisceau de câbles selon la revendication 9, dans lequel
la première étape comporte de :
former des troisièmes boucles dont chacune comporte la première boucle (20A, 20B, 20C, ...) et la deuxième boucle (30A, 30B, 30C, ...) reliées par la partie de liaison (12A, 12B, 12C, ...) en disposant le câble en forme de chiffre 8 ; et
former les faisceaux unitaires en pliant chacune des troisièmes boucles au niveau de la partie de liaison et en empilant la première boucle et la deuxième boucle.

11. Procédé de fabrication du faisceau de câbles selon la revendication 9, dans lequel
la première étape comporte de :
former la première boucle (20A, 20B, 20C, ...) en torsadant le câble dans une troisième direction ;
former la deuxième boucle (30A, 30B, 30C, ...) en torsadant le câble dans une quatrième direction opposée à la troisième direction ; et
former chacun des faisceaux unitaires (10A, 10B, 10C, ...) en empilant la première boucle et la deuxième boucle.

12. Procédé de fabrication du faisceau de câbles selon l'une quelconque des revendications 9 à 11, dans lequel
le faisceau de câbles comporte une partie intermédiaire (40A, 40B, ...) qui est intercalée entre les faisceaux unitaires (10A, 10B, 10C, ...) et relie les faisceaux unitaire, et
la seconde étape comporte d'enrouler la partie intermédiaire (40A, 40B, ...) dans la première direction de sorte que les parties de liaison des faisceaux unitaires adjacents sont situées à différentes positions sur un intervalle de 90 degrés à 270 degrés dans la première direction.

13. Appareil de fabrication de faisceau de câbles qui fabrique un faisceau de câbles (1, 1B, 1C, ...) comportant un câble (2) qui est enroulé, l'appareil de fabrication de faisceau de câbles comportant :
un dispositif de fixation (67) qui fixe un mouvement du câble dans une direction axiale à une position fixe sur le câble ;
un dispositif de transfert qui transfère le câble vers la position fixe ;
un dispositif de torsion (62) qui forme une boucle du câble en torsadant le câble transféré par le dispositif de transfert; et
un premier dispositif rotatif qui a une surface de placement sur laquelle la boucle formée par le dispositif de torsion est placée et empilée, et fait tourner la surface de placement autour d'un premier axe sensiblement parallèle à une direction normale de la surface de placement, **caractérisé en ce que**
le dispositif de torsion (62) forme une première boucle (20A, 20B, 20C, ...) en torsadant le câble dans une troisième direction et forme une deuxième boucle (30A, 30B, 30C...) en torsadant le câble dans une quatrième direction opposée à la troisième direction.

14. Appareil de fabrication de faisceau de câbles qui fabrique un faisceau de câbles (1, 1B, 1C, ...) comportant un câble (2) qui est enroulé, l'appareil de fabrication de faisceau de câbles comportant :
un dispositif de fixation (67) qui fixe un mouvement du câble dans une direction axiale à une position fixe sur le câble ;
un dispositif de transfert qui transfère le câble vers la position fixe ;
un dispositif de torsion (62) qui forme une boucle du câble en torsadant le câble transféré par le dispositif de transfert; et
un premier dispositif rotatif qui a une surface de placement sur laquelle la boucle formée par le dispositif de torsion est placée et empilée, et fait tourner la surface de placement autour d'un premier axe sensiblement parallèle à une direction normale de la surface de placement, **caractérisé par**
un second dispositif rotatif (612) qui fait tourner un tambour (611) qui fournit le câble autour d'un second axe qui est sensiblement parallèle à une direction dans laquelle le câble est transféré à partir du tambour.
